# EUROPEAN PATENT SPECIFICATION

(11) **EP 3 901 069 B1**
(45) Date of publication and mention of the grant of the patent: **07.01.2026**
(21) Application number: 20171283.3
(22) Date of filing: 24.04.2020
(51) Int. Cl.: B65G 35/06, B65G 60/00, B65G 65/00, B23P 19/00

(54) **DEVICES AND METHODS FOR LOADING/UNLOADING PARTS ON AND FROM CONTAINERS SUCH AS TRAYS**
VORRICHTUNGEN UND VERFAHREN ZUM BE- UND ENTLADEN VON TEILEN AUF UND VON BEHÄLTERN WIE SCHALEN
DISPOSITIFS ET PROCÉDÉS POUR CHARGER/DÉCHARGER DES PIÈCES SUR ET À PARTIR DE RÉCIPIENTS TELS QUE DES PLATEAUX

(43) Date of publication of application: 27.10.2021
(73) Proprietor: Hidria d.o.o., 5281 Spodnja Idrija (SI)
(72) Inventor: Grizonic, Bostjan, 6274 Smarje (SI); Savle, Silvin, 6000 Koper (SI); Krivicic, Karim, 6000 Koper (SI)
(74) Representative: BARRE LAFORGUE

(56) References cited:
- EP-A1- 1 935 526
- CN-A- 104 010 481
- JP-A- 2004 299 053
- JP-A- H0 366 534
- JP-A- H10 242 689
- JP-A- S61 270 033
- US-A1- 2015 284 192

## Description

### [Technical Field]

The subject application relates to devices and methods for loading/unloading parts on and from containers such as trays.

Similar devices may be found in CN106915634B. US 2015/284192 A1 further discloses a device according to the preamble of claim 1 and a method according to the preamble of claim 7. In particular, the document discloses a stacking and de-stacking device that has two tower-like stacking devices and one loading device between them for loading and unloading the goods carriers with goods. A conveying device with a single rail-borne transfer car connects the stacking devices and the loading device. Said device has a two-dimension architecture.

### [Background Art]

Nowadays, in the industry, various types of devices for loading/unloading parts grouped in containers are known to be used in a broad range of applications.

With these devices, as in most industrial operations, it is advisable to minimize the cycle time of the process to maximize production rates.

Parameters that influence the cycle time of the process of these devices are for example the size of the containers that are used.

Indeed, with large containers, the processing of a current container is time consuming and strongly impacts the cycle time.

Some known devices attempt to address this problem by using several manipulators and/or several areas for loading/unloading parts at the same time.

However, such known devices usually take a lot of space and may be costly.

It is an object of the present invention to provide a highly straightforward, reliable part loading and unloading device designed to overcome drawbacks typically associated with known devices.

### [Summary of Invention]

The subject application provides a device and a method for loading/unloading parts on and from trays, as described in the accompanying claims.

Dependent claims describe specific embodiments of the subject application.

These and other aspects of the subject application will be apparent from an elucidated based on the embodiments described hereinafter.

### [Brief Description of Drawings]

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale.
Figure 1 shows a device according to the subject application

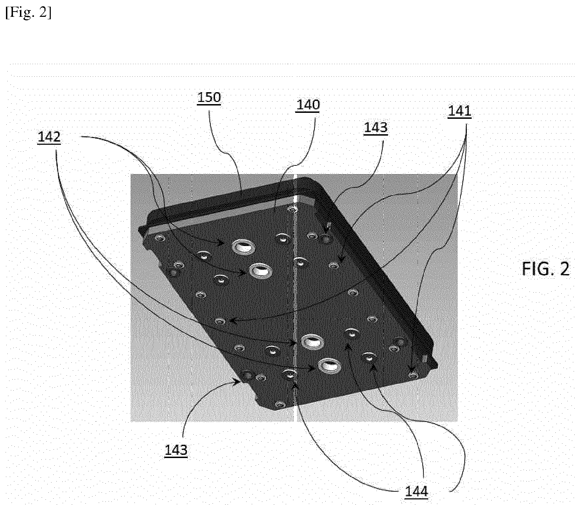

Figure 2 shows a bottom view of a transporter transporting a tray.

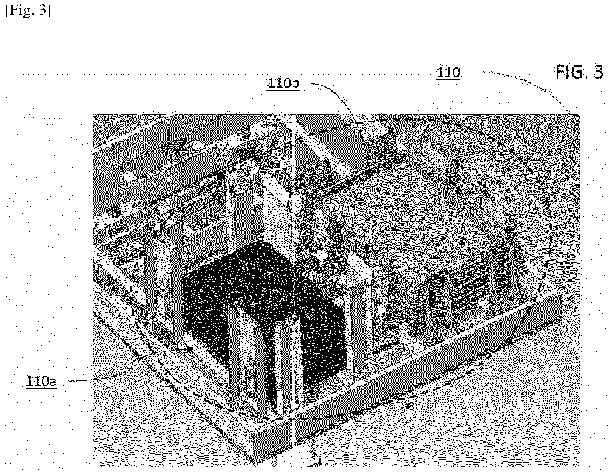

Figure 3 shows an exemplary arrangement of the storage area.
Figure 4 shows a general schematic flow diagram according to the subject application.
Figure 5 shows an exemplary detailed schematic flow diagram according to the subject application.

### [Description of Embodiments]

Because the illustrated embodiments of the subject application may for the most part, be composed of components known to the skilled person, details will not be explained in any greater extent than that considered necessary for the understanding and appreciation of the underlying concepts of the subject application, in order not to obfuscate or distract from the teachings of the subject application.

The subject application relates to a device 100 for loading/unloading parts on and from trays.

In an embodiment, one may mount the device 100 on a frame supported by vertical legs standing on the ground, a platform or similar supporting means.

In another embodiment, one may dispose the device 100 on another device or on the ground.

The tray 150 may be made from of a rigid or a flexible material, such as metal or plastic.

Furthermore, the trays 150 are stackable (i.e., two or more trays 150 can be stacked onto each other) to form a vertically extending stack of trays 150.

In the subject application, the tray 150 or a similar containing means comprises a body having a base surface and a bottom surface opposed to the base surface, thereby providing a structural protection to the parts.

In an embodiment, a peripheral lip extending upwardly from the bottom surface may surround the bottom surface.

In an example, the peripheral lip is configured to abut against a plate, or a similar abutting means of the device 100 such as to maintain the tray 150 in a substantially fixed position during the loading/unloading of parts on and from the tray 150.

In another example, the peripheral lip is configured to abut against a plate, or a similar abutting means of the frame such as to maintain the tray 150 in a substantially fixed position during the loading/unloading of parts on and from the tray 150.

In an embodiment, the base surface of the tray 150 is configured to support parts.

In another embodiment, the base surface of the tray 150 is configured to support one or more spacers that are in contact with the parts.

In an example, the parts are automotive work pieces.

However, the parts may be of other types such as electronic or other components, without requiring any substantial modification of the subject application.

In an embodiment, the parts may be arranged in the base surface of the tray 150 in the form of rows which are substantially parallel to each other.

In another embodiment, the parts may be arranged in the base surface of the tray 150 in the form of rows and columns.

In yet another embodiment, the parts may be arranged in the base surface of the tray 150 in the form of a honeycomb structure.

However, the parts may be arranged in the base surface of the tray 150 in other forms, without requiring any substantial modification of the subject application.

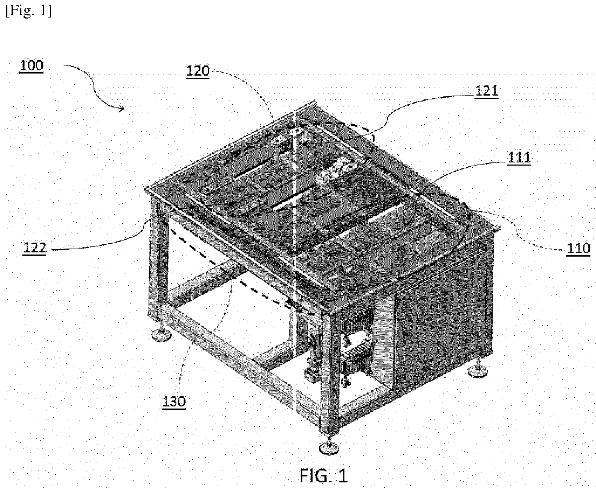

Referring to figure 1, the device 100 comprises a storage area 110, at least one tray 150 transporter 140, a loading/unloading area 120, a sliding area 130, a first lifter 121, a second lifter 122 and a controller.

In the subject application, the storage area 110 or a similar area is configured to store at least one stack of one or more trays 150.

In an embodiment, where one has mounted the device 100 on a frame, the storage area 110 may be disposed on or above the frame.

The storage area 110 comprises an incoming tray storage region 110a and an outgoing tray storage region 110b.

In an example, the incoming tray storage region 110a is adjacent to the outgoing tray storage region 110b.

In the subject application, the outgoing tray storage region 110a is configured to store a stack of one or more outgoing trays 150 that are intended to be directed toward the loading/unloading area 120. The outgoing trays 150 may be empty by not supporting any parts or may be filled by supporting one or more parts.

In an example, one can manually or automatically feed, from above, outgoing trays 150 in the outgoing tray storage region 110b.

In the subject application, the outgoing tray storage region 110b is configured to store a stack of one or more incoming trays 150 that are intended to be originating from the loading/unloading area 120. The incoming trays 150 may be empty by not supporting any parts or may be filled by supporting one or more parts.

In an example, one can manually or automatically remove, from above, incoming trays 150 from the incoming tray storage region 110a.

In the subject application, the tray transporter 140 or a similar transporting means is configured to transport a tray 150. In the industry, one may also know the tray transporter 140 under the name of "pallet".

In an embodiment, the tray transporter 140 may have at least the size of the tray 150.

In another embodiment, the tray transporter 140 may comprise a body having a base surface and a bottom surface opposed to the base surface.

In an example, the base surface of the tray transporter 140 is configured to support the bottom surface of a tray 150.

In another example, the base surface of the tray transporter 140 is configured to support one or more spacers that are in contact with the bottom surface of a tray 150.

In yet another embodiment, the bottom surface of the tray transporter 140 may have at least one row of rollers 141 or similar load-transmitting means.

The rollers 141 are configured to roll on sliding means such as guide rails.

In still yet another embodiment, the bottom surface of the tray transporter 140 may have clamping holes 142, centering holes 143 and stabilizing holes 144.

The clamping holes 142 are configured to engage with and disengage from clamping members such as a screw, a pin, a lever, a vacuum, an electromagnet, a magnet or similar clamping means.

The centering holes 143 are configured to engage with and disengage from centering pins or similar centering means.

The stabilizing holes 144 are configured to engage with and disengage from stabilizing pins or similar stabilizing means.

In the subject application, the loading/unloading area 120 or a similar area is configured to allow parts to be loaded/unloaded on and from a tray 150, when the tray 150, transported by the tray transporter 140, is disposed at least at one predetermined position within the loading/unloading area 120.

In an example, the at least one predetermined position is a central position of the loading/unloading area 120.

In another example, the at least one predetermined position comprises a plurality of positions between a first position and a second position of the loading/unloading area 120.

For instance, the first position may be a starting position of the loading/unloading area 120 and the second position may be a central position of the loading/unloading area 120.

In an embodiment, where one has mounted the device 100 on a frame, the loading/unloading area 120 may be disposed on or above the frame.

In the subject application, the loading/unloading area 120 is arranged downstream the storage area 110.

In an embodiment, the loading/unloading area 120 may be an automated loading/unloading area 120 where a loading/unloading manipulator is configured to load/unload the parts. The manipulator may be movably attached to a free end of a robotic positioner.

In an example, where the parts may be arranged in the base surface of the tray 150 in the form of rows which are substantially parallel to each other, the loading/unloading manipulator may load/unload one or more rows at the time.

In another example, where the parts may be arranged in the base surface of the tray 150 in the form of rows and columns, the loading/unloading manipulator may load/unload one or more rows and one or more columns at the time.

In yet another example, where the parts may be arranged in the base surface of the tray 150 in the form of a honeycomb structure, the loading/unloading manipulator may load/unload one or more cells at the time.

However, the loading/unloading manipulator may be configured to operate whatever the way the parts may be arranged in the base surface of the tray 150, without requiring any substantial modification of the subject application.

In the subject application, the sliding area 130 or a similar area is configured to convey the tray transporter 140 along a sliding path in a sliding manner.

Furthermore, in the subject application, the sliding area 130 is arranged below the storage area 110 and the loading/unloading area 120.

In an embodiment, where one has mounted the device 100 on a frame, the sliding area 130 may be disposed below the frame.

In the subject application, the sliding path comprises a first sliding path portion and a second sliding path portion.

First, the first sliding path portion starts at the storage area 110 and ends at the start of the loading/unloading area 120.

The first sliding path portion comprises a first slider or a similar sliding means having at least one row of longitudinal guide rails for guiding and rolling the rollers 141 of the tray transporter 140 in a sliding manner.

In an embodiment, the first slider may comprise centering pins or similar centering means for engaging with and disengaging from respective centering holes 143 of the tray transporter 140 to assist the placement of the rollers 141 on the longitudinal guide rails.

In another embodiment, the first slider may be coupled to an actuator such as a motor or similar actuating means.

Secondly, the second sliding path portion starts at the end of the loading/unloading area 120 and ends at the storage area 110.

The second sliding path portion comprises a second slider or a similar sliding means having at least one row of longitudinal guide rails for guiding and rolling the rollers 141 of the tray transporter 140 in a sliding manner.

In an embodiment, the second slider may comprise centering pins or similar centering means for engaging with and disengaging from respective centering holes 143 of the tray transporter 140 to assist the placement of the rollers 141 on the longitudinal guide rails.

In an embodiment, the second slider may be coupled to an actuator such as a motor or similar actuating means.

In the subject application, the first lifter 121 or a similar lifting means is configured to raise and lower the tray transporter 140, according to a raising position and a lowering position.

In an embodiment, the first lifter 121 may be coupled to an actuator such as a motor or similar actuating means.

The first lifter 121 is also configured to move the tray transporter 140 within the loading/unloading area 120, between the start of the loading/unloading area 120 and the predetermined position.

In an embodiment, the first lifter 121 may have clamping members such as a screw, a pin, a lever, a vacuum, an electromagnet, a magnet or similar clamping means for engaging with and disengaging from respective clamping holes 142 of the tray transporter 140.

In another embodiment, the first lifter 121 may have stabilizing pins or similar stabilizing means for engaging with and disengaging from respective stabilizing holes 144 of the tray transporter 140 to stabilize the tray transporter 140.

In yet another embodiment, the first lifter 121 may be hydraulic, pneumatic, mechanical, electromechanical or combinations thereof.

In the subject application, the second lifter 122 or a similar lifting means is configured to raise and lower the tray transporter 140, according to a raising position and a lowering position.

In an embodiment, the second lifter 122 may be coupled to an actuator such as a motor or similar actuating means.

The second lifter 122 is also configured to move the tray transporter 140 within the loading/unloading area 120, between the predetermined position and the end of the loading/unloading area 120.

In an embodiment, the second lifter 122 may have clamping members such as a screw, a pin, a lever, a vacuum, an electromagnet, a magnet or similar clamping means for engaging with and disengaging from respective clamping holes 142 of the tray transporter 140.

In another embodiment, the second lifter 122 may have stabilizing pins or similar stabilizing means for engaging with and disengaging from respective stabilizing holes 144 of the tray transporter 140 to stabilize the tray transporter 140.

In yet another embodiment, the second lifter 122 may be hydraulic, pneumatic, mechanical, electromechanical or combinations thereof.

In the subject application, the controller is configured to control the device 100.

In an example, the controller may be part of the device 100.

In another example, the controller may be part of a separate device distinct from the device 100, and to which the device 100 is connected.

The controller is configured to cooperatively control the first lifter 121 and the second lifter 122 to move to the predetermined position, such that, at a given moment, both the first lifter 121 and the second lifter 122 support the tray transporter 140 at the same time.

And the controller is further configured to control the second lifter 122 to remove and recover the tray transporter 140 from the first lifter 121, such that, at another given moment, only the second lifter 122 supports the tray transporter 140.

In an embodiment, the controller may be further configured to, when the first lifter 121 recovers the tray transporter 140 from the end of the first sliding path, control the first lifter 121 to move from the lowering position to the raising position. Then, the controller may be further configured to control the first lifter 121 to move the tray transporter 140 within the loading/unloading area 120, between the start of the loading/unloading area 120 and the predetermined position, where parts can be loaded/unloaded on and from the tray 150 transported by the tray transporter 140.

In another embodiment, the controller may be further configured to, as the first lifter 121 moves the tray transporter 140 to the predetermined position, control the second lifter 122, which is in the lowering position, to move within the loading/unloading area 120, between the end of the loading/unloading area 120 and the predetermined position, until the second lifter 122 is disposed under the tray transporter 140 connected to the first lifter 121. Then, the controller may be further configured to control the second lifter 122 to move from the lowering position to the raising position such that the second lifter 122 also connects to the tray transporter 140, while the first lifter 121 still connects to the tray transporter 140.

In yet another embodiment, the controller may be further configured to control the first lifter 121 to move from the raising position to the lowering position, such that the first lifter 121 disconnects from the tray transporter 140, while the second lifter 122 still connects to the tray transporter 140.

The device 100 further comprises a third lifter 111.

The third lifter 111 is configured to raise and lower the tray transporter 140, according to a raising position and a lowering position.

In an embodiment, the third lifter 111 may be coupled to an actuator such as a motor or similar actuating means.

The third lifter 111 is also configured to move the tray transporter 140 between the end of the second sliding path and the start of the first sliding path, through the storage area 110.

In an embodiment, the third lifter 111 may have clamping members such as a screw, a pin, a lever, a vacuum, an electromagnet, a magnet or similar clamping means for engaging with and disengaging from respective clamping holes 142 of the tray transporter 140.

In another embodiment, the third lifter 111 may have stabilizing pins or similar stabilizing means for engaging with and disengaging from respective stabilizing holes 144 of the tray transporter 140 to stabilize the tray transporter 140.

In yet another embodiment, the third lifter 111 may be hydraulic, pneumatic, mechanical, electromechanical or combinations thereof.

The controller is further configured to, when the third lifter 111 recovers the tray transporter 140 from the end of the second sliding path, control the third lifter 111 to move from the lowering position to the raising position, such that the third lifter 111 raises the tray transporter 140 from below the storage area 110 to store the tray 150 transported by the tray transporter 140 in the storage area 110.

In an embodiment, where the tray transporter 140 transports an incoming tray 150, the third lifter 111 may raise the tray transporter 140 from below the incoming tray storage region 110a, to store the incoming tray 150 in the incoming tray storage region 110a.

The controller is also configured to, when the tray 150 transported by the tray transporter 140 has been stored in the storage area 110, control the third lifter 111 to move from the raising position to the lowering position, such that the third lifter 111 lowers the tray transporter 140 from the storage area 110.

Furthermore, the controller is also configured to control the third lifter 111 to move the tray transporter 140 within the storage area 110.

In an embodiment, the third lifter 111 may move the tray transporter 140 from below the incoming tray storage region 110a to below the outgoing tray storage region 110b.

In the subject application, the outgoing tray storage region 110b may comprise a first stack holder for holding a stack of one or more trays 150.

The first stack holder is configured to be movable between a holding position and a release position.

In particular, the first stack holder is configured to move from the holding position to the release position, in response to the third lifter 111 moving from the lowering position to the raising position, thereby allowing the tray transporter 140 to support the stack of outgoing trays 150, the third lifter 111 supporting the tray transporter 140.

Also, the first stack holder is configured to move from the release position to the holding position, in response to the third lifter 111 moving from the raising position to the lowering position, thereby allowing only the bottom tray of the stack of outgoing trays 150 to exit from the outgoing tray storage region 110b and thereby further preventing the remaining incoming trays 150, stacked above the bottom tray of the stack of incoming trays 150, from falling from the outgoing tray storage region 110b.

In an example, the first stack holder comprises a plurality of plates or similar holding means which are movable back and forth between the holding position and the release position.

In the subject application, the incoming tray storage region 110a may comprise a second stack holder for holding a stack of one or more trays 150.

The second stack holder is configured to be movable between a holding position and a release position.

In particular, the second stack holder is configured to move from the holding position to the release position, in response to the third lifter 111 moving from the lowering position to the raising position, thereby allowing an incoming tray 150 transported by the tray transporter 140 to enter the incoming tray storage region 110a, so as to be stacked below the stack of incoming trays 150 and thereby further allowing the tray transporter 140 to support the stack of incoming trays 150.

In an embodiment, where the incoming tray storage region 110a is empty, the second stack holder may be configured to move from the holding position to the release position, in response to the third lifter 111 moving from the lowering position to the raising position, thereby allowing the tray transported by the tray transporter 140 to enter the incoming tray storage region 110a and thereby further allowing the tray transporter 140 to support the incoming tray 150.

Also, the second stack holder is configured to move from the release position to the holding position, in response to the tray transported by the tray transporter 140 entering the incoming tray storage region 110a, thereby preventing the stack of incoming trays 150 from falling from the incoming tray storage region 110a.

In an embodiment, the second stack holder may comprise a plurality of spring-loaded locking bodies or similar locking means which are movable back and forth between the holding position and the release position.

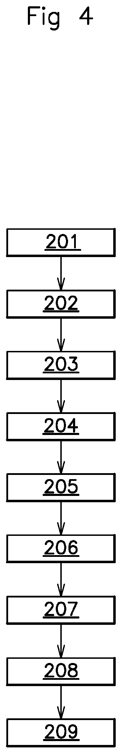

Figure 4 illustrates a general method 200 of functioning of a device 100 for loading/unloading parts on and from trays 150.

In step 201, there is provided a storage area 110 for storing a stack of one or more trays 150.

The storage area 110 is provided with an incoming tray storage region 110a for storing a stack of one or more incoming trays 150 and an outgoing tray storage region 110b for storing a stack of one or more outgoing trays 150.

In step 202, there is provided at least one tray transporter 140 for transporting a tray 150.

In step 203, there is provided a loading/unloading area 120 for allowing parts to be loaded/unloaded on and from the tray, when the tray transporter 140 is disposed such that the tray 150 is disposed at least at one predetermined position within the loading/unloading area 120.

In step 204, there is provided a sliding area 130 arranged below the storage area 110 and the loading/unloading area 120, for sliding the tray transporter 140 along a sliding path.

The first sliding path portion starts at the storage area 110 and ends at the start of the loading/unloading area 120, while the second sliding path portion starts at the end of the loading/unloading area 120 and ends at the storage area 110.

In step 205, there is provided a first lifter 121 for raising and lowering the tray transporter 140, and for moving the tray transporter 140 between the end of the first sliding path and the predetermined position.

In step 206, there is provided a second lifter 122 for raising and lowering the tray transporter 140, and, for moving the tray transporter 140 between the predetermined position and the start of the second sliding path.

In step 207, there is provided a controller for controlling the device 100.

In step 208, the controller cooperatively controls the first lifter 121 and the second lifter 122 to move to the predetermined position, such that, at a given moment, both the first lifter 121 and the second lifter 122 support the tray transporter 140 at the same time.

In step 209, the controller controls the second lifter 122 to remove and recover the tray transporter 140 from the first lifter 121, such that, at another given moment, only the second lifter 122 supports the tray transporter 140.

In the method 200, there is provided a third lifter 111 for,
- raising and lowering the tray transporter 140, and
- moving the tray transporter 140 between the end of the second sliding path and the start of the first sliding path, through the storage area 110.

In an embodiment of the method 200, when the third lifter 111 recovers the tray transporter 140 from the end of the second sliding path, the method further comprises:
- controlling, by the controller, the third lifter 111 to move from a lowering position to a raising position, such that the third lifter 111 raises the tray transporter 140 from below the incoming tray storage region 110a to store the tray transported by the tray transporter 140 in the incoming tray storage region 110a, and
- controlling, by the controller, the third lifter 111 to move from the raising position to the lowering position, such that the third lifter 111 lowers the tray transporter 140 from the incoming tray storage region 110a and to move the tray transporter 140 below the outgoing tray storage region 110b.

In another embodiment, the outgoing tray storage region 110b is provided with a first stack holder for,
- moving from a holding position to a release position, in response to the third lifter 111 moving from the lowering position to the raising position, thereby allowing the tray transporter 140 to support the stack of outgoing trays 150, and
- moving from the release position to the holding position, in response to the third lifter 111 moving from the raising position to the lowering position, thereby allowing only the bottom tray of the stack of outgoing trays 150 to exit from the outgoing tray storage region 110b and thereby further preventing the remaining outgoing trays 150, stacked above the bottom tray of the stack of outgoing trays 150, from falling from the outgoing tray storage region 110b.

In yet another embodiment, the incoming tray storage region 110a is provided with a second stack holder for,
- moving from a holding position to a release position, in response to the third lifter 111 moving from the lowering position to the raising position, thereby allowing an incoming tray 150 transported by the tray transporter 140 to enter the incoming tray storage region 110a, so as to be stacked below the stack of incoming trays 150 and thereby further allowing the tray transporter 140 to support the stack of incoming trays 150, and
- moving from the release position to the holding position, in response to the tray 150 transported by the tray transporter 140 entering the incoming tray storage region 110a, thereby preventing the stack of trays 150 from falling from the incoming tray storage region 110a.

In still another embodiment,
- the tray transporter 140 is provided with a body having a base surface and bottom surface opposed to the base surface, the bottom surface being provided with clamping holes 142, and
- the first lifter 121, the second lifter 122 and the third lifter 111, are each provided with clamping members for engagement with and disengagement from respective clamping holes 142.

In still yet another embodiment compatible with the previous embodiment,
- the tray transporter 140 is provided with a body having a base surface and bottom surface opposed to the base surface, the bottom surface being provided with at least one row of rollers 141, and
- the first sliding path portion and the second sliding path portion, each are provided with a slider having at least one row of longitudinal guide rails for guiding and rolling the rollers 141.

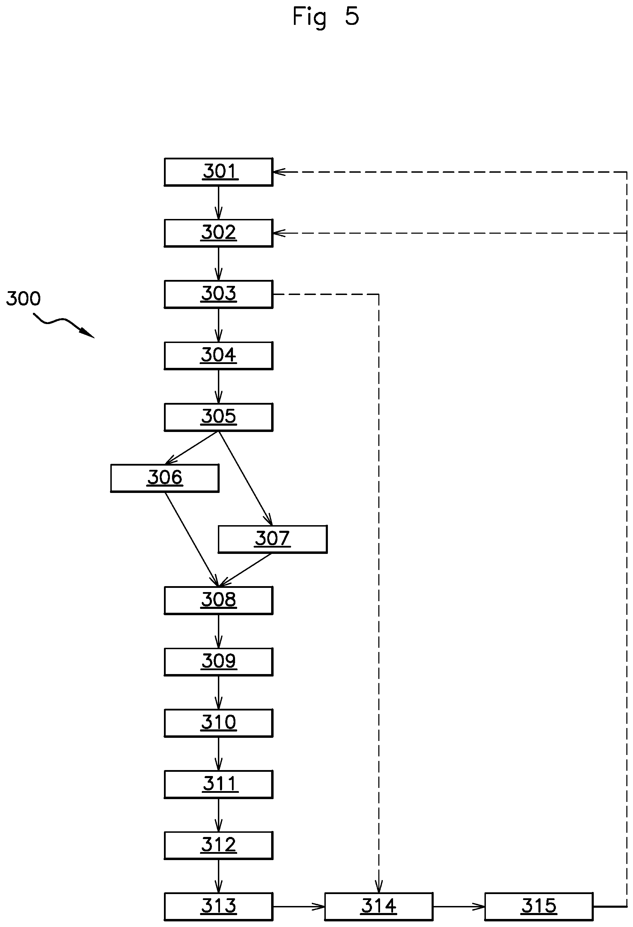

Figure 5 illustrates an embodiment of the general method of figure 4.

The method may start when the third lifter 111 is in the lowering position, below the outgoing tray storage region 110b, where the third lifter 111 has its clamping members engaged with the clamping holes 142 of the tray transporter 140. As a reminder, at that moment, the tray transporter 140 does not support any tray 150.

In step 301, one places a stack of one or more outgoing trays 150 in the outgoing tray storage region 110b. The first stack holder is in its holding position and prevents the stack from falling from the outgoing tray storage region 110b.

In step 302, the first stack holder moves from the holding position to the release position, in response to the third lifter 111 moving from the lowering position to the raising position. Hence, as the third lifter 111 reaches the raising position, and since the clamping members of the third lifter 111 are engaged with respective clamping holes 142 of the tray transporter 140, the tray transporter 140 supports the stack of outgoing trays 150.

In step 303, the first stack holder moves from the release position to the holding position, in response to the third lifter 111 moving from the raising position to the lowering position. As the third lifter 111 reaches the lowering position, the centering pins of the first slider engage with respective centering holes 143 of the tray transporter 140 and the clamping members of the third lifter 111 disengage from respective clamping holes 142 of the tray transporter 140. Furthermore, as the third lifter 111 reaches the lowering position, the first stack holder allows only the bottom tray of the stack of outgoing trays 150 to exit from the outgoing tray storage region 110b and further prevents the remaining outgoing trays 150, stacked above the bottom tray of the stack of outgoing trays 150, from falling from the outgoing tray storage region 110b.

In an embodiment, the third lifter 111 may then move below the incoming tray storage region 110a. Then, the method may go to step 313 where the third lifter 111 would recover the tray transporter 140.

In a particular embodiment, the device 100 may comprise a first tray transporter 140 and a second tray transporter 140.

In that case, the method would start with the first tray transporter 140 at step 302. Later, after step 303, the third lifter 111 would move below the outgoing tray storage region 110b, where one could engage the clamping members of the third lifter 111 with the clamping holes 142 of the second tray transporter 140. Then, the method would start at step 302 with the second tray transporter 140. Following step 303, started with the second transporter, the third lifter 111 would move below the incoming tray storage region 110a and the method may go to step 313 where the third lifter 111 would recover the first tray transporter 140. Thus, the method could iterate continuously, with the third lifter 111 alternatively recovering the first tray transporter 140 and the second tray transporter 140.

In step 304, the first slider slides the tray transporter 140, supporting the outgoing tray recovered from the outgoing tray storage region 110b, along the first sliding path to the start of the loading/unloading area 120, where the first lifter 121 is in the lowering position.

In step 305, at the start of the loading/unloading area 120, the first lifter 121 moves from the lowering position to the raising position. As the first lifter 121 leaves the lowering position, the clamping members of the first lifter 121 engage with respective clamping holes 142 of the tray transporter 140 and the centering pins of the first slider disengage from respective centering holes 143 of the tray transporter 140.

In step 306, when the first lifter 121 is in the raising position, the first lifter 121 moves the tray transporter 140 within the loading/unloading area 120, between the start of the loading/unloading area 120 and the predetermined position. The first lifter 121 moves the tray transporter 140 until the outgoing tray 150, transported by the tray transporter 140, is disposed at the at least at one predetermined position within the loading/unloading area 120, where parts can be loaded/unloaded on and from the outgoing tray 150.

In an embodiment, as the loading/unloading of parts on or from the tray 150 is taking place, the first lifter 121 may move to an intermediate position, between the raising position and the lowering position, thereby allowing subsequent parts to be loaded/unloaded when the first lifter 121 returns to the raising position.

In an example, where the parts may be arranged in the base surface of the tray 150 in the form of rows which are substantially parallel to each other, one or more rows is loaded/unloaded at the time before the first lifter 121 moves to the intermediate position. Then, the first lifter 121 moves the tray transporter 140 to allow the subsequent one or more rows to be loaded/unloaded when the first lifter 121 returns to the raising position. Finally, the first lifter 121 moves from the intermediate position to the raising position where parts can be loaded/unloaded on and from the tray 150.

In another example, where the parts may be arranged in the base surface of the tray 150 in the form of rows and columns, one or more rows and one or more columns at the time is loaded/unloaded at the time before the first lifter 121 moves to the intermediate position. Then, the first lifter 121 moves the tray transporter 140 to allow the subsequent one or more rows and one or more columns to be loaded/unloaded when the first lifter 121 returns to the raising position. Finally, the first lifter 121 moves from the intermediate position to the raising position where parts can be loaded/unloaded on and from the tray 150.

In yet another example, where the parts may be arranged in the base surface of the tray 150 in the form of a honeycomb structure, one or more cells at the time is loaded/unloaded at the time before the first lifter 121 moves to the intermediate position. Then, the first lifter 121 moves the tray transporter 140 to allow the subsequent one or more cells to be loaded/unloaded when the first lifter 121 returns to the raising position. Finally, the first lifter 121 moves from the intermediate position to the raising position where parts can be loaded/unloaded on and from the tray 150.

In step 307, in parallel to step 306, the second lifter 122 is in the lowering position and moves within the loading/unloading area 120, between the end of the loading/unloading area 120 and the predetermined position, until the second lifter 122 is disposed under the tray transporter 140.

In an embodiment, the second lifter 122 may move to the predetermined position before the loading/unloading of parts has started.

In another embodiment, the second lifter 122 may move to the predetermined position when the loading/unloading of parts starts.

In yet another embodiment, the second lifter 122 may move to the predetermined position after the loading/unloading of parts has started.

In still another embodiment, the second lifter 122 may move to the predetermined position after the loading/unloading of parts has ended.

In step 308, the second lifter 122 moves from the lowering position to the raising position. As the second lifter 122 reaches the raising position, the clamping members of the second lifter 122 engage with respective clamping holes 142 of the tray transporter 140. At that moment, both the first lifter 121 and the second lifter 122 support the tray transporter 140 at the same time.

In step 309, the clamping members of the first lifter 121 disengage from respective clamping holes 142 of the tray transporter 140. And then, the first lifter 121 moves from the raising position to the lowering position. At that moment, only by the second lifter 122 supports the tray transporter 140.

In step 310, the first lifter 121 moves to the start of the loading/unloading area 120.

In a particular embodiment, at the end of step 310, the method may return to step 305, where the first lifter 121 may load/unload a subsequent tray transporter 140 supporting a subsequent outgoing tray 150.

In step 311, as the loading/unloading of parts on or from the current incoming tray 150 continues, the second lifter 122 moves the tray transporter 140 within the loading/unloading area 120, between the predetermined position and the end of the loading/unloading area 120. The second lifter 122 moves the tray transporter 140 within the loading/unloading area 120 until the loading/unloading of parts on or from the outgoing tray 150 ends.

In an embodiment, as the loading/unloading of parts on or from the tray 150 is taking place, the second lifter 122 may move to an intermediate position, between the raising position and the lowering position, thereby allowing subsequent parts to be loaded/unloaded when the second lifter 122 returns to the raising position.

In an example, where the parts may be arranged in the base surface of the tray 150 in the form of rows which are substantially parallel to each other, one or more rows is loaded/unloaded at the time before the second lifter 122 moves to the intermediate position. Then, the second lifter 122 moves the tray transporter 140 to allow the subsequent one or more rows to be loaded/unloaded when the second lifter 122 returns to the raising position. Finally, the second lifter 122 moves from the intermediate position to the raising position where parts can be loaded/unloaded on and from the tray 150.

In another example, where the parts may be arranged in the base surface of the tray 150 in the form of rows and columns, one or more rows and one or more columns at the time is loaded/unloaded at the time before the second lifter 122 moves to the intermediate position. Then, the second lifter 122 moves the tray transporter 140 to allow the subsequent one or more rows and one or more columns to be loaded/unloaded when the second lifter 122 returns to the raising position. Finally, the second lifter 122 moves from the intermediate position to the raising position where parts can be loaded/unloaded on and from the tray 150.

In yet another example, where the parts may be arranged in the base surface of the tray 150 in the form of a honeycomb structure, one or more cells at the time is loaded/unloaded at the time before the second lifter 122 moves to the intermediate position. Then, the second lifter 122 moves the tray transporter 140 to allow the subsequent one or more cells to be loaded/unloaded when the second lifter 122 returns to the raising position. Finally, the second lifter 122 moves from the intermediate position to the raising position where parts can be loaded/unloaded on and from the tray 150.

At the end of step 311, as all parts of the tray 150 have been loaded/unloaded, the tray transported by the second lifter 122 becomes an incoming tray 150.

In step 312, the second lifter 122 moves from the raising position to the lowering position. As the second lifter 122 reaches the lowering position, the centering pins of the second slider engage with respective centering holes 143 of the tray transporter 140 and the clamping members of the second lifter 122 disengage from respective clamping holes 142 of the tray transporter 140.

In step 313, the second slider slides the tray transporter 140, supporting the incoming tray 150, along the second sliding path to the storage area 110, where the third lifter 111 is in the lowering position. As explained above, the incoming tray storage region 110a may be empty or may support a stack of one or more incoming trays 150.

In step 314, where the incoming tray storage region 110a supports a stack of one or more incoming trays 150, the second stack holder moves from the holding position to the release position, in response to the third lifter 111 moving from the lowering position to the raising position. As the third lifter 111 reaches the raising position, the clamping members of the third lifter 111 engage with respective clamping holes 142 of the tray transporter 140, thereby allowing the incoming tray 150, transported by the tray transporter 140 originating from the loading/unloading area 120, to enter the incoming tray storage region 110a, so as to be stacked below the stack of incoming trays 150 and thereby further allowing the tray transporter 140 to support the stack of incoming trays 150.

In an embodiment of step 314, where the incoming tray storage region 110a is empty, the third lifter 111 moves from the lowering position to the raising position. The second stack holder moves from the holding position to the release position, in response to the third lifter 111 moving from the lowering position to the raising position. As the third lifter 111 reaches the raising position, the clamping members of the third lifter 111 engage with respective clamping holes 142 of the tray transporter 140, thereby allowing the incoming tray 150, transported by the tray transporter 140 originating from the loading/unloading area 120, to enter the incoming tray storage region 110a and thereby further allowing the tray transporter 140 to support the incoming tray 150.

Furthermore, in step 314, the second stack holder moves from the release position to the holding position, in response to the incoming tray 150 transported by the tray transporter 140 originating from the loading/unloading area 120, entering the incoming tray storage region 110a, thereby preventing the stack of incoming trays 150 from falling from the incoming tray storage region 110a.

In step 315, the second stack holder remains in the holding position, in response to the third lifter 111 moving from the raising position to the lowering. As the third lifter 111 reaches the lowering position, the second stack holder prevents the stack of trays 150 from falling from the incoming tray storage region 110a. At that moment the third lifter 111 supports the tray transporter 140 which does not support any tray 150. Then, the third lifter 111 moves below the outgoing tray storage region 110b and the method may return to step 301 or step 302.

As noted herein, the devices and methods according to the subject application provides numerous advantageous over the known devices, as the cycle time is optimized without having to use several manipulators and/or several areas for loading/unloading parts at the same time.

In addition, the device 100 is simple to manufacture and assemble, and relatively inexpensive to construct. Indeed, the first lifter 121, the second lifter 122 and the third lifter 111 need to be movable only in X and Z directions while the first slider and the second slider need to be movable in only Y direction.

Furthermore, the device 100 may be used for loading/unloading parts on a from trays 150 without any modification, depending on the needs and applications. Indeed, one just have to decide the type of trays 150 to be used as incoming trays 150 or as outgoing trays 150.

## Claims

1. A device (100) for loading/unloading parts on and from trays (150), the device (100) comprising:
- a storage area (110) for storing at least one stack of one or more trays (150), the storage area (110) comprising an incoming tray storage region (110a) for storing a stack of one or more incoming trays (150), and an outgoing tray storage region (110b) for storing a stack of one or more outgoing trays (150),
- at least one tray transporter (140) for transporting a tray (150),
- a loading/unloading area (120) for allowing parts to be loaded/unloaded on and from the tray, when the tray transporter (140) is disposed such that the tray (150) is disposed at least at one predetermined position within the loading/unloading area (120),
- a sliding area (130) arranged below the storage area (110) and the loading/unloading area (120), for sliding the tray transporter (140) along a sliding path, the sliding path comprising,
a first sliding path portion starting at the storage area (110) and ending at the start of the loading/unloading area (120), and
a second sliding path portion starting at the end of the loading/unloading area (120) and ending at the storage area (110),
- a first lifter (121) for,
raising and lowering the tray transporter (140), and
moving the tray transporter (140) between the end of the first sliding path and the predetermined position,
- a second lifter (122) for,
raising and lowering the tray transporter (140), and
moving the tray transporter (140) between the predetermined position and the start of the second sliding path,
- a controller for controlling the device (100),
wherein,
the controller is configured to
cooperatively control the first lifter (121) and the second lifter (122) to move to the predetermined position, such that, at a given moment, both the first lifter (121) and the second lifter (122) support the tray transporter (140) at the same time, and
control the second lifter (122) to remove and recover the tray transporter (140) from the first lifter (121), such that, at another given moment, only the second lifter (122) supports the tray transporter (140),
**characterized in that** the device (100) further comprises
- a third lifter (111) for,
raising and lowering the tray transporter (140), and
moving the tray transporter (140) between the end of the second sliding path and the start of the first sliding path, through the storage area (110).

2. Device of claim 1, wherein the controller is further configured to, when the third lifter (111) recovers the tray transporter (140) from the end of the second sliding path:
- control the third lifter (111) to move from a lowering position to a raising position, such that the third lifter (111) raises the tray transporter (140) from below the incoming tray storage region (110a) to store an incoming tray transported by the tray transporter (140) in the incoming tray storage region (110a), and
- control the third lifter (111) to move from the raising position to the lowering position, such that the third lifter (111) lowers the tray transporter (140) from the incoming tray storage region (110a), and further to move the tray transporter (140) below the outgoing tray storage region (110b).

3. Device of claim 2, wherein the outgoing tray storage region (110b) comprises a first stack holder configured to,
- move from a holding position to a release position, in response to the third lifter (111) moving from the lowering position to the raising position, thereby allowing the tray transporter (140) to support the stack of outgoing trays (150), and
- move from the release position to the holding position, in response to the third lifter (111) moving from the raising position to the lowering position, thereby allowing only the bottom tray of the stack of outgoing trays (150) to exit from the outgoing tray storage region (110b) and thereby further preventing the remaining outgoing trays (150), stacked above the bottom tray of the stack of outgoing trays (150), from falling from the outgoing tray storage region (110b).

4. Device of claims 2 or 3, wherein the incoming tray storage region (110a) comprises a second stack holder configured to,
- move from a holding position to a release position, in response to the third lifter (111) moving from the lowering position to the raising position, thereby allowing an incoming tray (150) transported by the tray transporter (140) to enter the incoming tray storage region (110a), so as to be stacked below the stack of incoming trays (150) and thereby further allowing the tray transporter (140) to support the stack of incoming trays (150), and
- move from the release position to the holding position, in response to the incoming tray transported by the tray transporter (140) entering the incoming tray storage region (110a), thereby preventing the stack of incoming trays (150) from falling from the incoming tray storage region (110a).

5. Device of claims 1, 2, 3, or 4 wherein,
- the tray transporter (140) comprises a body having a base surface and bottom surface opposed to the base surface, the bottom surface having clamping holes (142), and
- the first lifter (121), the second lifter (122) and the third lifter (111), are each having clamping members for engagement with and disengagement from respective clamping holes (142).

6. Device of claims 1, 2, 3, 4, or 5 wherein,
- the tray transporter (140) comprises body having a base surface and bottom surface opposed to the base surface, the bottom surface having at least one row of rollers (141), and
- the first sliding path portion and the second sliding path portion, each comprises a slider having at least one row of longitudinal guide rails for guiding and rolling the rollers (141).

7. A method (200) of loading/unloading parts on and from trays (150), the method (200) comprising:
- providing (201) a storage area (110) for storing at least one stack of one or more trays (150), and providing the storage area (110) with an incoming tray storage region (110a) for storing a stack of one or more incoming trays (150) and an outgoing tray storage region (110b) for storing a stack of one or more outgoing trays (150),
- providing (202) at least one tray transporter (140) for transporting a tray (150),
- providing (203) a loading/unloading area (120) for allowing parts to be loaded/unloaded on and from the tray (150), when the tray transporter (140) is disposed such that the tray is disposed at least at one predetermined position within the loading/unloading area (120),
- providing (204) a sliding area (130) arranged below the storage area (110) and the loading/unloading area (120), for sliding the tray transporter (140) along a sliding path, the sliding path comprising,
a first sliding path portion starting at the storage area (110) and ending at the start of the loading/unloading area (120), and
a second sliding path portion starting at the end of the loading/unloading area (120) and ending at the storage area (110),
- providing (205) a first lifter (121) for,
raising and lowering the tray transporter (140), and
moving the tray transporter (140) between the end of the first sliding path and the predetermined position,
**characterized in that** the method further comprises:
- providing (206) a second lifter (122) for, raising and lowering the tray transporter (140), and
moving the tray transporter (140) between the predetermined position and the start of the second sliding path,
- providing a third lifter (111) for,
raising and lowering the tray transporter (140), and
moving the tray transporter (140) between the end of the second sliding path and the start of the first sliding path through the storage area (110),
- providing (207) a controller,
wherein, the method further comprises
cooperatively controlling (208), by the controller, the first lifter (121) and the second lifter (122) to move to the predetermined position, such that, at a given moment, both the first lifter (121) and the second lifter (122) support the tray transporter (140) at the same time, and
controlling (209), by the controller, the second lifter (122) to remove and recover the tray transporter (140) from the first lifter (121), such that, at another given moment, only the second lifter (122) supports the tray transporter (140).

8. Method of claim 7 further comprising, when the third lifter (111) recovers the tray transporter (140) from the end of the second sliding path,
- controlling, by the controller, the third lifter (111) to move from a lowering position to a raising position, such that the third lifter (111) raises the tray transporter (140) from below the incoming tray storage region (110a) to store an incoming tray transported by the tray transporter (140) in the incoming tray storage region (110a), and
- controlling, by the controller, the third lifter (111) to move from the raising position to the lowering position, such that the third lifter (111) lowers the tray transporter (140) from the incoming tray storage region (110a) to move the tray transporter (140) below the outgoing tray storage region (110b).

9. Method of claim 8, further comprising, providing the outgoing tray storage region (110b) with a first stack holder for,
- moving from a holding position to a release position, in response to the third lifter (111) moving from the lowering position to the raising position, thereby allowing the tray transporter (140) to support the stack of trays (150), and
- moving from the release position to the holding position, in response to the third lifter (111) moving from the raising position to the lowering position, thereby allowing only the bottom tray of the stack of outgoing trays (150) to exit from the outgoing tray storage region (110b) and thereby further preventing the remaining outgoing trays 150), stacked above the bottom tray of the stack of outgoing trays (150), from falling from the outgoing tray storage region (110b).

10. Method of claims 8 or 9 further comprising, providing the incoming tray storage region (110a) with a second stack holder for,
- moving from a holding position to a release position, in response to the third lifter (111) moving from the lowering position to the raising position, thereby allowing an incoming tray (150) transported by the tray transporter (140) to enter the empty tray storage region (110a), so as to be stacked below the stack of incoming trays (150) and thereby further allowing the tray transporter (140) to support the stack of incoming trays (150), and
- moving from the release position to the holding position, in response to the incoming tray transported by the tray transporter (140) entering the incoming tray storage region (110a), thereby preventing the stack of incoming trays (150) from falling from the incoming tray storage region (110a).

11. Method of claims 7, 8, 9, or 10 further comprising,
- providing the tray transporter (140) with a body having a base surface and bottom surface opposed to the base surface, the bottom surface being provided with clamping holes (142), and
- providing to each of the first lifter (121), the second lifter (122) and the third lifter (111), clamping members for engagement with and disengagement from respective clamping holes (142).

12. Method of claims 7, 8, 9, 10, or 11 further comprising,
- providing the tray transporter (140) with a body having a base surface and bottom surface opposed to the base surface, the bottom surface being provided with at least one row of rollers (141), and
- providing to each of the first sliding path portion and the second sliding path portion, a slider having at least one row of longitudinal guide rails for guiding and rolling the rollers (141).

## Patentansprüche

1. Vorrichtung (100) zum Be-/Entladen von Teilen auf und aus Schalen (150), wobei die Vorrichtung (100) Folgendes umfasst:
- einen Lagerbereich (110) zum Lagern mindestens eines Stapels aus einer oder mehreren Schalen (150), wobei der Lagerbereich (110) einen Eingangsschalenlagerbereich (110a) zum Lagern eines Stapels aus einer oder mehreren eingehenden Schalen (150) und einen Ausgangsschalenlagerbereich (110b) zum Lagern eines Stapels aus einer oder mehreren ausgehenden Schalen (150) umfasst,
- mindestens einen Schalentransporter (140) zum Transportieren einer Schale (150),
- einen Be-/Entladebereich (120), um zu ermöglichen, dass Teile auf die und von der Schale be-/entladen werden, wenn der Schalentransporter (140) so angeordnet ist, dass sich die Schale (150) zumindest an einer vorbestimmten Position innerhalb des Be-/Entladebereichs (120) befindet,
- einen Gleitbereich (130), der unterhalb des Lagerbereichs (110) und des Be-/Entladebereichs (120) angeordnet ist, um den Schalentransporter (140) entlang einer Gleitbahn zu verschieben, wobei die Gleitbahn Folgendes umfasst:
einen ersten Gleitbahnabschnitt, der am Lagerbereich (110) beginnt und am Anfang des Be-/Entladebereichs (120) endet, und
einen zweiten Gleitbahnabschnitt, der am Ende des Be-/Entladebereichs (120) beginnt und am Lagerbereich (110) endet,
- einen ersten Heber (121) zum
Anheben und Absenken des Schalentransporters (140) und Bewegen des Schalentransporters (140) zwischen dem Ende der ersten Gleitbahn und der vorbestimmten Position,
- einen zweiten Heber (122) zum
Anheben und Absenken des Schalentransporters (140) und Bewegen des Schalentransporters (140) zwischen der vorbestimmten Position und dem Beginn der zweiten Gleitbahn,
- eine Steuerung zum Steuern der Vorrichtung (100), wobei
die Steuerung zu Folgendem ausgelegt ist:
Kooperatives Steuern des ersten Hebers (121) und des zweiten Hebers (122), um sich in die vorbestimmte Position zu bewegen, so dass zu einem gegebenen Zeitpunkt sowohl der erste Heber (121) als auch der zweite Heber (122) den Schalentransporter (140) gleichzeitig abstützen, und
Steuern des zweiten Hebers (122), den Schalentransporter (140) aus dem ersten Heber (121) zu entfernen und zurückzuholen, so dass zu einem anderen gegebenen Zeitpunkt nur der zweite Heber (122) den Schalentransporter (140) abstützt,
**dadurch gekennzeichnet, dass** die Vorrichtung (100) ferner Folgendes umfasst:
- einen dritten Heber (111) zum
Anheben und Absenken des Schalentransporters (140) und Bewegen des Schalentransporters (140) zwischen dem Ende der zweiten Gleitbahn und dem Anfang der ersten Gleitbahn durch den Lagerbereich (110).

2. Vorrichtung nach Anspruch 1, wobei die Steuerung ferner zu Folgendem ausgelegt ist, wenn der dritte Heber (111) den Schalentransporter (140) vom Ende der zweiten Gleitbahn zurückholt:
- Steuern des dritten Hebers (111), sich von einer Absenkposition in eine Anhebeposition zu bewegen, so dass der dritte Heber (111) den Schalentransporter (140) von unterhalb des Eingangsschalenlagerbereichs (110a) anhebt, um eine vom Schalentransporter (140) transportierte eingehende Schale im Eingangsschalenlagerbereich (110a) zu lagern, und
- Steuern des dritten Hebers (111), sich von der Anhebeposition in die Absenkposition zu bewegen, so dass der dritte Heber (111) den Schalentransporter (140) vom Eingangsschalenlagerbereich (110a) absenkt und ferner den Schalentransporter (140) unter den Ausgangsschalenlagerbereich (110b) bewegt.

3. Vorrichtung nach Anspruch 2, wobei der Ausgangsschalenlagerbereich (110b) einen ersten Stapelhalter umfasst, der dazu ausgelegt ist,
- sich von einer Halteposition in eine Freigabeposition zu bewegen, wenn sich der dritte Heber (111) von der Absenkposition in die Anhebeposition bewegt, wodurch der Schalentransporter (140) den Stapel der ausgehenden Schalen (150) abstützen kann, und
- sich von der Freigabeposition in die Halteposition zu bewegen, wenn sich der dritte Heber (111) von der Anhebeposition in die Absenkposition bewegt, wodurch nur die untere Schale des Stapels der ausgehenden Schalen (150) aus dem Ausgangsschalenlagerbereich (110b) austreten kann und wodurch verhindert wird, dass die verbleibenden ausgehenden Schalen (150), die über der unteren Schale des Stapels der ausgehenden Schalen (150) gestapelt sind, aus dem Ausgangsschalenlagerbereich (110b) fallen.

4. Vorrichtung nach Anspruch 2 oder 3, wobei der Eingangsschalenlagerbereich (110a) einen zweiten Stapelhalter umfasst, der dazu ausgelegt ist,
- sich von einer Halteposition in eine Freigabeposition zu bewegen, wenn sich der dritte Heber (111) von der Absenkposition in die Anhebeposition bewegt, wodurch ermöglicht wird, dass eine vom Schalentransporter (140) transportierte eingehende Schale (150) in den Eingangsschalenlagerbereich (110a) eintritt, so dass sie unter den Stapel eingehender Schalen (150) gestapelt wird, und dadurch ferner ermöglicht wird, dass der Schalentransporter (140) den Stapel eingehender Schalen (150) abstützt,
- sich von der Freigabeposition in die Halteposition zu bewegen, wenn die vom Schalentransporter (140) transportierte eingehende Schale in den Eingangsschalenlagerbereich (110a) eintritt, wodurch verhindert wird, dass der Stapel der eingehenden Schalen (150) aus dem Eingangsschalenlagerbereich (110a) fällt.

5. Vorrichtung nach Anspruch 1, 2, 3 oder 4, wobei
- der Schalentransporter (140) einen Körper mit einer Grundfläche und einer der Grundfläche gegenüberliegenden Bodenfläche umfasst, wobei die Bodenfläche Einspannlöcher (142) aufweist, und
- der erste Heber (121), der zweite Heber (122) und der dritte Heber (111) jeweils Einspannelemente zum Eingreifen in und Lösen von den jeweiligen Einspannlöchern (142) aufweisen.

6. Vorrichtung nach Anspruch 1, 2, 3, 4 oder 5, wobei
- der Schalentransporter (140) einen Körper mit einer Grundfläche und einer der Grundfläche gegenüberliegenden Bodenfläche umfasst, wobei die Bodenfläche mindestens eine Reihe von Rollen (141) aufweist, und
- der erste Gleitbahnabschnitt und der zweite Gleitbahnabschnitt jeweils einen Schieber mit mindestens einer Reihe von Längsführungsschienen zum Führen und Rollen der Rollen (141) umfassen.

7. Verfahren (200) zum Be-/Entladen von Teilen auf und von Schalen (150), wobei das Verfahren (200) Folgendes umfasst:
- Vorsehen (201) eines Lagerbereichs (110) zum Lagern mindestens eines Stapels aus einer oder mehreren Schalen (150) und Versehen des Lagerbereichs (110) mit einem Eingangsschalenlagerbereich (110a) zum Lagern eines Stapels aus einer oder mehreren eingehenden Schalen (150) und einem Ausgangsschalenlagerbereich (110b) zum Lagern eines Stapels aus einer oder mehreren ausgehenden Schalen (150),
- Vorsehen (202) mindestens eines Schalentransporters (140) zum Transportieren einer Schale (150),
- Vorsehen (203) eines Be-/Entladebereichs (120), um zu ermöglichen, dass Teile auf die und von der Schale (150) be-/entladen werden, wenn der Schalentransporter (140) so angeordnet ist, dass sich die Schale zumindest an einer vorbestimmten Position innerhalb des Be-/Entladebereichs (120) befindet,
- Vorsehen (204) eines Gleitbereichs (130), der unterhalb des Lagerbereichs (110) und des Be-/Entladebereichs (120) angeordnet ist, um den Schalentransporter (140) entlang einer Gleitbahn zu verschieben, wobei die Gleitbahn Folgendes umfasst:
einen ersten Gleitbahnabschnitt, der am Lagerbereich (110) beginnt und am Anfang des Be-/Entladebereichs (120) endet, und
einen zweiten Gleitbahnabschnitt, der am Ende des Be-/Entladebereichs (120) beginnt und am Lagerbereich (110) endet,
- Vorsehen (205) eines ersten Hebers (121) zum
Anheben und Absenken des Schalentransporters (140) und Bewegen des Schalentransporters (140) zwischen dem Ende der ersten Gleitbahn und der vorbestimmten Position,
**dadurch gekennzeichnet, dass** das Verfahren ferner Folgendes umfasst:
- Vorsehen (206) eines zweiten Hebers (122) zum Anheben und Absenken des Schalentransporters (140) und Bewegen des Schalentransporters (140) zwischen der vorbestimmten Position und dem Beginn der zweiten Gleitbahn,
- Vorsehen eines dritten Hebers (111) zum Anheben und Absenken des Schalentransporters (140) und Bewegen des Schalentransporters (140) zwischen dem Ende der zweiten Gleitbahn und dem Anfang der ersten Gleitbahn durch den Lagerbereich (110),
- Vorsehen (207) einer Steuerung,
wobei das Verfahren ferner Folgendes umfasst:
Kooperatives Steuern (208) des ersten Hebers (121) und des zweiten Hebers (122) durch die Steuerung, sich in die vorbestimmte Position zu bewegen, so dass zu einem gegebenen Zeitpunkt sowohl der erste Heber (121) als auch der zweite Heber (122) den Schalentransporter (140) gleichzeitig abstützen, und
Steuern (209) des zweiten Hebers (122) durch die Steuerung, den Schalentransporter (140) aus dem ersten Heber (121) zu entfernen und zurückzuholen, so dass zu einem anderen gegebenen Zeitpunkt nur der zweite Heber (122) den Schalentransporter (140) abstützt.

8. Verfahren nach Anspruch 7, ferner umfassend, wenn der dritte Heber (111) den Schalentransporter (140) vom Ende der zweiten Gleitbahn zurückholt:
- Steuern des dritten Hebers (111) durch die Steuerung, sich von einer Absenkposition in eine Anhebeposition zu bewegen, so dass der dritte Heber (111) den Schalentransporter (140) von unterhalb des Eingangsschalenlagerbereichs (110a) anhebt, um eine vom Schalentransporter (140) transportierte eingehende Schale im Eingangsschalenlagerbereich (110a) zu lagern, und
- Steuern des dritten Hebers (111) durch die Steuerung, sich von der Anhebeposition in die Absenkposition zu bewegen, so dass der dritte Heber (111) den Schalentransporter (140) vom Eingangsschalenlagerbereich (110a) absenkt, um den Schalentransporter (140) unter den Ausgangsschalenlagerbereich (110b) zu bewegen.

9. Verfahren nach Anspruch 8, ferner umfassend Versehen des Ausgangsschalenlagerbereichs (110b) mit einem ersten Stapelhalter zum
- Bewegen von einer Halteposition in eine Freigabeposition, wenn sich der dritte Heber (111) von der Absenkposition in die Anhebeposition bewegt, wodurch der Schalentransporter (140) den Stapel Schalen (150) abstützen kann, und
- Bewegen von der Freigabeposition in die Halteposition, wenn sich der dritte Heber (111) von der Anhebeposition in die Absenkposition bewegt, wodurch nur die untere Schale des Stapels der ausgehenden Schalen (150) aus dem Ausgangsschalenlagerbereich (110b) austreten kann und wodurch verhindert wird, dass die verbleibenden ausgehenden Schalen (150), die über der unteren Schale des Stapels der ausgehenden Schalen (150) gestapelt sind, aus dem Ausgangsschalenlagerbereich (110b) fallen.

10. Verfahren nach Anspruch 8 oder 9, ferner umfassend Versehen des Eingangsschalenlagerbereichs (110a) mit einem zweiten Stapelhalter zum
- Bewegen von einer Halteposition in eine Freigabeposition, wenn sich der dritte Heber (111) von der Absenkposition in die Anhebeposition bewegt, wodurch ermöglicht wird, dass eine vom Schalentransporter (140) transportierte eingehende Schale (150) in den leeren Schalenlagerbereich (110a) eintritt, so dass sie unter den Stapel eingehender Schalen (150) gestapelt wird, und dadurch ferner ermöglicht wird, dass der Schalentransporter (140) den Stapel eingehender Schalen (150) abstützt, und
- Bewegen von der Freigabeposition in die Halteposition, wenn die vom Schalentransporter (140) transportierte eingehende Schale in den Eingangsschalenlagerbereich (110a) eintritt, wodurch verhindert wird, dass der Stapel der eingehenden Schalen (150) aus dem Eingangsschalenlagerbereich (110a) fällt.

11. Verfahren nach Anspruch 7, 8, 9 oder 10, das ferner Folgendes umfasst:
- Versehen des Schalentransporters (140) mit einem Körper mit einer Grundfläche und einer der Grundfläche gegenüberliegenden Bodenfläche, wobei die Bodenfläche mit Einspannlöchern (142) versehen ist, und
- Versehen des ersten Hebers (121), des zweiten Hebers (122) und des dritten Hebers (111) mit Einspannelementen für den Eingriff in die jeweiligen Einspannlöcher (142) und das Lösen davon.

12. Verfahren nach Anspruch 7, 8, 9, 10 oder 11, das ferner Folgendes umfasst:
- Versehen des Schalentransporters (140) mit einem Körper mit einer Grundfläche und einer der Grundfläche gegenüberliegenden Bodenfläche, wobei die Bodenfläche mit mindestens einer Reihe von Rollen (141) versehen ist, und
- Versehen des ersten Gleitbahnabschnitts und des zweiten Gleitbahnabschnitts jeweils mit einem Schieber mit mindestens einer Reihe von Längsführungsschienen zum Führen und Rollen der Rollen (141).

## Revendications

1. Dispositif (100) pour charger/décharger des pièces sur des plateaux (150), et à partir de ceux-ci, le dispositif (100) comprenant :
- une zone de stockage (110) destinée à stocker au moins un empilement d'un ou de plusieurs plateaux (150), la zone de stockage (110) comprenant une région de stockage de plateau entrant (110a) destinée à stocker un empilement d'un ou de plusieurs plateaux entrants (150), et une région de stockage de plateau sortant (110b) destinée à stocker un empilement d'un ou de plusieurs plateaux sortants (150),
- au moins un transporteur de plateau (140) destiné à transporter un plateau (150),
- une zone de charge/décharge (120) destinée à permettre à des pièces d'être chargées/déchargées sur le plateau, et à partir de celui-ci, lorsque le transporteur de plateau (140) est disposé de manière telle que le plateau (150) est disposé au moins à une position prédéterminée à l'intérieur de la zone de charge/décharge (120),
- une zone de coulissement (130) agencée en dessous de la zone de stockage (110) et de la zone de charge/décharge (120), destinée à faire coulisser le transporteur de plateau (140) le long d'un chemin de coulissement, le chemin de coulissement comprenant
une première partie de chemin de coulissement commençant à la zone de stockage (110) et finissant au commencement de la zone de charge/décharge (120), et
une seconde partie de chemin de coulissement commençant à la fin de la zone de charge/décharge (120) et finissant à la zone de stockage (110),
- un premier organe de levage (121) destiné à élever et à abaisser le transporteur de plateau (140), et
à déplacer le transporteur de plateau (140) entre la fin du premier chemin de coulissement et la position prédéterminée,
- un deuxième organe de levage (122) destiné
à élever et à abaisser le transporteur de plateau (140), et
à déplacer le transporteur de plateau (140) entre la position prédéterminée et le commencement du second chemin de coulissement,
- une unité de commande destinée à commander le dispositif (100),
dans lequel
l'unité de commande est configurée pour
commander en coopération le premier organe de levage (121) et le deuxième organe de levage (122) pour qu'ils se déplacent jusqu'à la position prédéterminée, de manière telle que, à un moment donné, le premier organe de levage (121) et le deuxième organe de levage (122) supportent tous les deux le transporteur de plateau (140) en même temps, et
commander le deuxième organe de levage (122) pour enlever et récupérer le transporteur de plateau (140) à partir du premier organe de levage (121), de manière telle que, à un autre moment donné, seulement le deuxième organe de levage (122) supporte le transporteur de plateau (140),
**caractérisé en ce que** le dispositif (100) comprend en outre
- un troisième organe de levage (111) destiné
à élever et à abaisser le transporteur de plateau (140), et
à déplacer le transporteur de plateau (140) entre la fin du second chemin de coulissement et le commencement du premier chemin de coulissement, à travers la zone de stockage (110).

2. Dispositif de la revendication 1, dans lequel l'unité de commande est en outre configurée pour, lorsque le troisième organe de levage (111) récupère le transporteur de plateau (140) à partir de la fin du second chemin de coulissement :
- commander le troisième organe de levage (111) pour qu'il se déplace depuis une position d'abaissement jusqu'à une position d'élévation, de manière telle que le troisième organe de levage (111) élève le transporteur de plateau (140) à partir d'en dessous de la région de stockage de plateau entrant (110a) pour stocker un plateau entrant transporté par le transporteur de plateau (140) dans la région de stockage de plateau entrant (110a), et
- commander le troisième organe de levage (111) pour qu'il se déplace depuis la position d'élévation jusqu'à la position d'abaissement, de manière telle que le troisième organe de levage (111) abaisse le transporteur de plateau (140) à partir de la région de stockage de plateau entrant (110a), et en outre pour qu'il déplace le transporteur de plateau (140) en dessous de la région de stockage de plateau sortant (110b).

3. Dispositif de la revendication 2, dans lequel la région de stockage de plateau sortant (110b) comprend un premier organe de retenue d'empilement configuré pour
- se déplacer depuis une position de retenue jusqu'à une position de libération, en réponse au fait que le troisième organe de levage (111) se déplace depuis la position d'abaissement jusqu'à la position d'élévation, permettant ainsi au transporteur de plateau (140) de supporter l'empilement de plateaux sortants (150), et
- se déplacer depuis la position de libération jusqu'à la position de retenue, en réponse au fait que le troisième organe de levage (111) se déplace depuis la position d'élévation jusqu'à la position d'abaissement, permettant ainsi seulement au plateau inférieur de l'empilement de plateaux sortants (150) de sortir depuis la région de stockage de plateau sortant (110b) et empêchant ainsi en outre les plateaux sortants restants (150), empilés au-dessus du plateau inférieur de l'empilement de plateaux sortants (150), de tomber depuis la région de stockage de plateau sortant (110b).

4. Dispositif des revendications 2 ou 3, dans lequel la région de stockage de plateau entrant (110a) comprend un second organe de retenue d'empilement configuré pour
- se déplacer depuis une position de retenue jusqu'à une position de libération, en réponse au fait que le troisième organe de levage (111) se déplace depuis la position d'abaissement jusqu'à la position d'élévation, permettant ainsi à un plateau entrant (150) transporté par le transporteur de plateau (140) d'entrer dans la région de stockage de plateau entrant (110a), afin d'être empilé en dessous de l'empilement de plateaux entrants (150) et permettant ainsi en outre au transporteur de plateau (140) de supporter l'empilement de plateaux entrants (150), et
- se déplacer depuis la position de libération jusqu'à la position de retenue, en réponse au fait que le plateau entrant transporté par le transporteur de plateau (140) entre dans la région de stockage de plateau entrant (110a), empêchant ainsi l'empilement de plateaux entrants (150) de tomber depuis la région de stockage de plateau entrant (110a).

5. Dispositif des revendications 1, 2, 3, ou 4, dans lequel
- le transporteur de plateau (140) comprend un corps ayant une surface de base et une surface inférieure opposée à la surface de base, la surface inférieure ayant des trous de serrage (142), et
- le premier organe de levage (121), le deuxième organe de levage (122), et le troisième organe de levage (111), ont chacun des éléments de serrage destinés à entrer en prise avec des trous de serrage respectifs (142), et à se disjoindre de ceux-ci.

6. Dispositif des revendications 1, 2, 3, 4, ou 5, dans lequel
- le transporteur de plateau (140) comprend un corps ayant une surface de base et une surface inférieure opposée à la surface de base, la surface inférieure ayant au moins une rangée de rouleaux (141), et
- la première partie de chemin de coulissement et la seconde partie de chemin de coulissement comprennent chacune un organe de coulissement ayant au moins une rangée de rails de guidage longitudinaux destinés à guider et à faire rouler les rouleaux (141).

7. Procédé (200) pour charger/décharger des pièces sur des plateaux (150), et à partir de ceux-ci, le procédé (200) comprenant :
- la fourniture (201) d'une zone de stockage (110) destinée à stocker au moins un empilement d'un ou de plusieurs plateaux (150), et la fourniture, à la zone de stockage (110), d'une région de stockage de plateau entrant (110a) destinée à stocker un empilement d'un ou de plusieurs plateaux entrants (150) et d'une région de stockage de plateau sortant (110b) destinée à stocker un empilement d'un ou de plusieurs plateaux sortants (150),
- la fourniture (202) au moins d'un transporteur de plateau (140) destiné à transporter un plateau (150),
- la fourniture (203) d'une zone de charge/décharge (120) destinée à permettre à des pièces d'être chargées/déchargées sur le plateau (150), et à partir de celui-ci, lorsque le transporteur de plateau (140) est disposé de manière telle que le plateau est disposé au moins à une position prédéterminée à l'intérieur de la zone de charge/décharge (120),
- la fourniture (204) d'une zone de coulissement (130) agencée en dessous de la zone de stockage (110) et de la zone de charge/décharge (120), destinée à faire coulisser le transporteur de plateau (140) le long **d'un** chemin de coulissement, le chemin de coulissement comprenant
une première partie de chemin de coulissement commençant à la zone de stockage (110) et finissant au commencement de la zone de charge/décharge (120), et
une seconde partie de chemin de coulissement commençant à la fin de la zone de charge/décharge (120) et finissant à la zone de stockage (110),
- la fourniture (205) d'un premier organe de levage (121) destiné
à élever et à abaisser le transporteur de plateau (140), et
à déplacer le transporteur de plateau (140) entre la fin du premier chemin de coulissement et la position prédéterminée,
**caractérisé en ce que** le procédé comprend en outre :
- la fourniture (206) d'un deuxième organe de levage (122) destiné
à élever et à abaisser le transporteur de plateau (140), et
à déplacer le transporteur de plateau (140) entre la position prédéterminée et le commencement du second chemin de coulissement,
- la fourniture d'un troisième organe de levage (111) destiné
à élever et à abaisser le transporteur de plateau (140), et
à déplacer le transporteur de plateau (140) entre la fin du second chemin de coulissement et le commencement du premier chemin de coulissement à travers la zone de stockage (110),
- la fourniture (207) d'une unité de commande,
dans lequel le procédé comprend en outre
la commande en coopération (208), par l'unité de commande, du premier organe de levage (121) et du deuxième organe de levage (122) pour qu'ils se déplacent jusqu'à la position prédéterminée, de manière telle que, à un moment donné, le premier organe de levage (121) et le deuxième organe de levage (122) supportent tous les deux le transporteur de plateau (140) en même temps, et la commande (209), par l'unité de commande, du deuxième organe de levage (122) pour enlever et récupérer le transporteur de plateau (140) à partir du premier organe de levage (121), de manière telle que, à un autre moment donné, seulement le deuxième organe de levage (122) supporte le transporteur de plateau (140).

8. Procédé de la revendication 7, comprenant en outre, lorsque le troisième organe de levage (111) récupère le transporteur de plateau (140) à partir de la fin du second chemin de coulissement,
- la commande, par l'unité de commande, du troisième organe de levage (111) pour qu'il se déplace depuis une position d'abaissement jusqu'à une position d'élévation, de manière telle que le troisième organe de levage (111) élève le transporteur de plateau (140) à partir d'en dessous de la région de stockage de plateau entrant (110a) pour stocker un plateau entrant transporté par le transporteur de plateau (140) dans la région de stockage de plateau entrant (110a), et
- la commande, par l'unité de commande, du troisième organe de levage (111) pour qu'il se déplace depuis la position d'élévation jusqu'à la position d'abaissement, de manière telle que le troisième organe de levage (111) abaisse le transporteur de plateau (140) à partir de la région de stockage de plateau entrant (110a) pour qu'il déplace le transporteur de plateau (140) en dessous de la région de stockage de plateau sortant (110b).

9. Procédé de la revendication 8, comprenant en outre la fourniture, à la région de stockage de plateau sortant (110b), d'un premier organe de retenue d'empilement destiné
- à se déplacer depuis une position de retenue jusqu'à une position de libération, en réponse au fait que le troisième organe de levage (111) se déplace depuis la position d'abaissement jusqu'à la position d'élévation, permettant ainsi au transporteur de plateau (140) de supporter l'empilement de plateaux (150), et
- à se déplacer depuis la position de libération jusqu'à la position de retenue, en réponse au fait que le troisième organe de levage (111) se déplace depuis la position d'élévation jusqu'à la position d'abaissement, permettant ainsi seulement au plateau inférieur de l'empilement de plateaux sortants (150) de sortir depuis la région de stockage de plateau sortant (110b) et empêchant ainsi en outre les plateaux sortants restants 150), empilés au-dessus du plateau inférieur de l'empilement de plateaux sortants (150), de tomber depuis la région de stockage de plateau sortant (110b).

10. Procédé des revendications 8 ou 9, comprenant en outre la fourniture, à la région de stockage de plateau entrant (110a), d'un second organe de retenue d'empilement destiné
- à se déplacer depuis une position de retenue jusqu'à une position de libération, en réponse au fait que le troisième organe de levage (111) se déplace depuis la position d'abaissement jusqu'à la position d'élévation, permettant ainsi à un plateau entrant (150) transporté par le transporteur de plateau (140) d'entrer dans la région de stockage de plateau vide (110a), afin d'être empilé en dessous de l'empilement de plateaux entrants (150) et permettant ainsi en outre au transporteur de plateau (140) de supporter l'empilement de plateaux entrants (150), et
- à se déplacer depuis la position de libération jusqu'à la position de retenue, en réponse au fait que le plateau entrant transporté par le transporteur de plateau (140) entre dans la région de stockage de plateau entrant (110a), empêchant ainsi l'empilement de plateaux entrants (150) de tomber depuis la région de stockage de plateau entrant (110a).

11. Procédé des revendications 7, 8, 9, ou 10, comprenant en outre
- la fourniture, au transporteur de plateau (140), d'un corps ayant une surface de base et une surface inférieure opposée à la surface de base, la surface inférieure étant pourvue de trous de serrage (142), et
- la fourniture, à chacun du premier organe de levage (121), du deuxième organe de levage (122), et du troisième organe de levage (111), d'éléments de serrage destinés à entrer en prise avec des trous de serrage respectifs (142), et à se disjoindre de ceux-ci.

12. Procédé des revendications 7, 8, 9, 10, ou 11, comprenant en outre
- la fourniture, au transporteur de plateau (140), d'un corps ayant une surface de base et une surface inférieure opposée à la surface de base, la surface inférieure étant pourvue d'au moins une rangée de rouleaux (141), et
- la fourniture, à chacune de la première partie de chemin de coulissement et de la seconde partie de chemin de coulissement, d'un organe de coulissement ayant au moins une rangée de rails de guidage longitudinaux destinés à guider et à faire rouler les rouleaux (141).
